# EUROPEAN PATENT SPECIFICATION

(11) **EP 2 682 414 B1**
(45) Date of publication and mention of the grant of the patent: **25.07.2018**
(21) Application number: 11860200.2
(22) Date of filing: 28.11.2011
(51) Int. Cl.: C08G 63/78, C08G 63/80, C08G 63/12, C08L 67/02, C08G 63/60

(54) **METHOD FOR PREPARING WHOLLY AROMATIC LIQUID CRYSTALLINE POLYESTER RESIN AND RESIN PREPARED BY THE METHOD, AND COMPOUND INCLUDING THE RESIN**
VERFAHREN ZUR HERSTELLUNG EINES VOLLAROMATISCHEN FLÜSSIGKRISTALL-POLYESTERHARZES, ANHAND DIESES VERFAHRENS HERGESTELLTES HARZ UND VERBINDUNG MIT DEM HARZ
PROCÉDÉ DE PRÉPARATION D'UNE RÉSINE DE POLYESTER CRISTALLINE LIQUIDE ENTIÈREMENT AROMATIQUE ET RÉSINE PRÉPARÉE PAR LE PROCÉDÉ, ET COMPOSÉ INCLUANT LA RÉSINE

(30) Priority: 04.03.2011 KR 20110019647
(43) Date of publication of application: 08.01.2014
(73) Proprietor: Shenzhen Wote Advanced Materials Co., Ltd., Nanshan District, Shenzhen (CN)
(72) Inventor: KIM, Hyun Min, Daejeon 305-752 (KR); YUN, Jong Hwa, Daejeon 302-737 (KR); KIM, Mahn Jong, Daejeon 305-761 (KR)
(74) Representative: Stepney, Gregory John
(86) International application number: PCT/KR2011/009101
(87) International publication number: WO 2012/121472

(56) References cited:
- EP-A1- 1 645 584
- GB-A- 2 006 239
- KR-A- 20100 102 923
- US-A- 5 663 276
- US-A1- 2006 084 747
- US-A1- 2006 186 375
- US-A1- 2009 111 964

## Description

### TECHNICAL FIELD

Provided are a method of preparing a wholly aromatic liquid crystalline polyester resin and a wholly aromatic liquid crystalline polyester resin prepared by the method, and a compound of the wholly aromatic liquid crystalline polyester resin. More particularly, provided are a method of preparing a wholly aromatic liquid crystalline polyester resin including a first temperature increasing step, an isothermal maintaining step, and a second temperature increasing step, a wholly aromatic liquid crystalline polyester resin prepared by the method, and a compound of wholly aromatic liquid crystalline polyester resin .

### BACKGROUND ART

A wholly aromatic liquid crystalline polyester resin has excellent heat resistance, and excellent fluidity when melted, and thus, is widely used as a material for precision injection molding, particularly in the field of electronic parts. In particular, due to excellent dimensional stability and electrical insulating characteristics, the use of wholly aromatic liquid crystalline polyester resin as a film for electronic materials and materials for substrates is increasing. Processes for preparing wholly aromatic polyesters are known for example from US 5,663,276 and EP 1 645 584. The wholly aromatic liquid crystalline polyester resin is a kind of a thermoplastic polymer synthesized by condensation polymerization and when there are residual unreacted monomers (including acetylated monomers) in the resin due to an insufficient condensation polymerization reaction during a synthesis, problems such as generation of gas or carbonization of a resin compound or an injection molded product may occur during the preparation of the resin compound by extrusion or the preparation of the injection molded product by an injection.

To solve these problems, a temperature increasing rate of a reactor during the condensation polymerization reaction was decreased to sufficiently perform the reaction in a conventional method; however, in this case, productivity of the resin decreases due to an increase in polymerization time. A temperature increasing rate greater than a predetermined rate is needed to improve the productivity of the resin; however, in this case, a reaction occurs abruptly during an initial step of the condensation polymerization reaction, thereby substantially increasing the amount of acetic acid generated and causing a bumping phenomenon of a reaction mixture in the reactor, which causes difficulties in preparing a resin having a uniform degree of polymerization.

### DETAILED DESCRIPTION OF THE INVENTION

### TECHNICAL PROBLEM

An embodiment of the present invention provides a method of preparing a wholly aromatic liquid crystalline polyester resin including a first temperature increasing step, an isothermal maintaining step, and a second temperature increasing step.

Another embodiment of the present invention provides a wholly aromatic liquid crystalline polyester resin prepared according to the method of preparing the wholly aromatic liquid crystalline polyester resin.

Another embodiment of the present invention provides a wholly aromatic liquid crystalline polyester resin compound including the wholly aromatic liquid crystalline polyester resin.

### TECHNICAL SOLUTION

According to an embodiment of the present invention, there is provided a method of preparing a wholly aromatic liquid crystalline polyester resin including a step (a first temperature increasing step) of increasing the temperature of a reaction mixture including at least one monomer at a first temperature increasing rate up to a first temperature;
a step (an isothermal maintaining step) of maintaining the reaction mixture that passed through the first temperature increasing step at the first temperature for a first time; and
a step (a second temperature increasing step) of increasing the temperature of the reaction mixture that passed through the isothermal maintaining step at a second temperature increasing rate,
wherein the first temperature is 250°C to 270°C and the first time is 1 hour to 2 hours, and
wherein the first temperature increasing step, the isothermal maintaining step, and the second temperature increasing step are performed in a reactor in which an agitator is provided, and the second temperature increasing step is terminated when a torque value of the agitator reaches 5 N.m to 6 N.m. The at least one monomer includes a hydroxy group containing monomer, and the method of preparing the wholly aromatic liquid crystalline polyester resin may further include a step (an acetylation step) of contacting the at least one monomer with a carboxylic acid anhydride before the first temperature increasing step to acetylate a hydroxy group of the hydroxy group containing monomer.

The first temperature increasing rate may be about 0.5°C/min to about 1.5°C/min.

The first temperature is 250°C to 270°C, and the first time is 1 hour to 2 hours.

The second temperature increasing rate may be about 0.5°C/min to about 1.5°C/min.

The acetylation step, the first temperature increasing step, the isothermal maintaining step, and the second temperature increasing step are performed in a reactor in which an agitator is provided, and the second temperature increasing step may be terminated when a torque value of the agitator reaches about 5 N·m to about 6 N·m.

The monomer may include at least one compound selected from the group consisting of 2,6-naphthalene dicarboxylic acid, 1,4-naphthalene dicarboxylic acid, 2,3-naphthalene dicarboxylic acid, 3-hydroxy-2-naphthalene carboxylic acid, 6-hydroxy-1-naphthalene carboxylic acid, 1,4-dihydroxy naphthalene, 2,6-dihydroxy naphthalene, 4-hydroxy benzoic acid, and benzene-1,4-dicarboxylic acid.

The method of preparing the wholly aromatic liquid crystalline polyester resin may further include a step of solid phase polymer condensation of a reaction mixture that passed through the second temperature increasing step.

According to another aspect of the present invention, there is provided a wholly aromatic liquid crystalline polyester resin prepared according to the method of preparing the wholly aromatic liquid crystalline polyester resin, wherein the resin does not substantially include unreacted monomers.

According to another aspect of the present invention, there is provided a wholly aromatic liquid crystalline polyester resin compound including the wholly aromatic liquid crystalline polyester resin.

### ADVANTAGEOUS EFFECTS

According to an embodiment of the present invention, provided are a method of preparing a wholly aromatic liquid crystalline polyester resin and a wholly aromatic liquid crystalline polyester resin prepared by the method, wherein the method includes a first temperature increasing step, an isothermal maintaining step, and a second temperature increasing step to prevent a bumping phenomenon caused by abrupt external leakage of acetic acid, which is a byproduct, to obtain a resin having uniform properties, to prevent degradation of the synthesized resin, to sufficiently remove byproducts to decrease the amount of monomers to decrease generation of gas during post processing of the resin such as extrusion or injection, and to obtain a resin having a high degree of polymerization and excellent heat resistance.

According to another embodiment of the present invention, there is provided a wholly aromatic liquid crystalline polyester resin compound including the wholly aromatic liquid crystalline polyester resin.

### BEST MODE

Hereinafter, a method of preparing a wholly aromatic liquid crystalline polyester resin according to an embodiment of the present invention will be described in detail.

A method of preparing a wholly aromatic liquid crystalline polyester resin according to an embodiment of the present invention includes a step (a first temperature increasing step) of increasing the temperature of a reaction mixture including at least one monomer at a first temperature increasing rate up to a first temperature; a step (an isothermal maintaining step) of maintaining the reaction mixture that passed through the first temperature increasing step at the first temperature for a first time; and a step (a second temperature increasing step) of increasing the temperature of the reaction mixture that passed through the isothermal maintaining step at a second temperature increasing rate, wherein the first temperature is 250°C to 270°C and the first time is 1 hour to 2 hours, and wherein the first temperature increasing step, the isothermal maintaining step, and the second temperature increasing step are performed in a reactor in which an agitator is provided, and the second temperature increasing step is terminated when a torque value of the agitator reaches 5 N.m to 6 N.m. The at least one monomer includes a hydroxy group containing monomer, and the method of preparing the wholly aromatic liquid crystalline polyester resin may further include a step (an acetylation step) of contacting the at least one monomer with a carboxylic acid anhydride before the first temperature increasing step to acetylate a hydroxy group of the hydroxy group containing monomer.

In the acetylation step, an acetyl group (-COCH₃) is introduced to a hydroxy group (-OH) of the at least one monomer to form an acetyloxy group (-OCOCH₃) and generate acetic acid gas. Here, the acetic acid gas may be easily removed from products.

In the acetylation step, a content of the carboxylic acid anhydride used may be about 1.0 part by mole to about 4.0 parts by mole based on 1 part by mole of a total content of the hydroxy group included in the monomers used. When the content of the carboxylic acid anhydride used is within the range above in the acetylation step, a red-colored phenomena does not occur in the synthesized resin and the resin compound because the monomers used are sufficiently acetylated, and unreacted carboxylic acid anhydride is easily removed because only a small amount of unreacted carboxylic acid anhydride exists.

The acetylation step may be performed in a temperature range of about 140°C to about 160°C for about 1 hour to about 3 hours. When the temperature and time are in the respective ranges above, hydroxy groups of the monomers are sufficiently changed to acetyl groups such that a post condensation polymerization reaction may be performed at a low temperature and the synthesized wholly aromatic liquid crystalline polyester resin does not degrade and thus, the red-colored phenomena does not occur in the resin.

A reaction mixture that passed through the acetylation step (hence, a reaction mixture just before being subjected to the first temperature increasing step) includes an acetylated monomer.

As an example, the monomer may include an aromatic hydroxy carboxylic acid. In this case, the monomer may additionally include at least one compound selected from the group consisting of an aromatic diol, an aromatic dicarboxylic acid, an aromatic diamine, an aromatic hydroxylamine, and an aromatic amino carboxylic acid.

As another example, the monomer may include an aromatic diol and an aromatic dicarboxylic acid. In this case, the monomer may additionally include at least one compound selected from the group consisting of an aromatic hydroxy carboxylic acid, an aromatic diamine, an aromatic hydroxylamine, and an aromatic amino carboxylic acid.

The aromatic hydroxy carboxylic acid may include at least one compound selected from the group consisting of 3-hydroxy-2-naphthalene carboxylic acid, 6-hydroxy-1-naphthalene carboxylic acid, para-hydroxy benzoic acid, and 2-hydroxy-6-naphthoic acid.

The aromatic diol may include at least one compound selected from the group consisting of resorcinol, 2,2'-biphenol, 4,4'-biphenol, hydroquinone, 1,4-dihydroxy naphthalene, and 2,6-dihydroxy naphthalene.

The aromatic dicarboxylic acid may include at least one compound selected from the group consisting of 2,6-naphthalene dicarboxylic acid, 1,4-naphthalene dicarboxylic acid, 2,3-naphthalene dicarboxylic acid, isophthalic acid, and terephthalic acid.

The aromatic diamine may include at least one compound selected from the group consisting of 1,4-phenylenediamine, 1,3-phenylenediamine, and 2,6-naphthalene diamine.

The aromatic hydroxylamine may include at least one compound selected from the group consisting of 3-aminophenol, 4-aminophenol, and 2-amino-6-naphthol.

The aromatic amino carboxylic acid may include at least one compound selected from the group consisting of 4-amino-benzoic acid, 2-amino-naphthalene-6-carboxylic acid, and 4-amino-biphenyl-4-carboxylic acid.

To obtain a wholly aromatic liquid crystalline polyester resin having excellent heat resistance, the monomer may include at least one compound selected from the group consisting of 2,6-naphthalene dicarboxylic acid, 1,4-naphthalene dicarboxylic acid, 2,3-naphthalene dicarboxylic acid, 3-hydroxy-2-naphthalene carboxylic acid, 6-hydroxy-1-naphthalene carboxylic acid, 1,4-dihydroxy naphthalene, 2,6-dihydroxy naphthalene, 4-hydroxy benzoic acid, and benzene-1,4-dicarboxylic acid.

The carboxylic acid anhydride may include at least one compound selected from the group consisting of acetic anhydride, diphenyl carbonate, and benzyl acetate.

Hereinafter, the term 'monomer' as used herein refers to an acetylated monomer and/or other monomers.

The first temperature increasing step initiates a condensation polymerization reaction of monomers and subsequently activates the condensation polymerization reaction. The first temperature increasing rate may be about 0.5°C/min to about 1.5°C/min. When the first temperature increasing rate is within the range above, the productivity of resin is maintained at a high level while the condensation polymerization reaction of monomers is sufficiently progressed, thereby decreasing the amount of unreacted monomers. Accordingly, a wholly aromatic liquid crystalline polyester resin having a high degree of polymerization may be obtained, and when residual unreacted monomers exist in a resin or a resin compound during post processing such as extrusion or injection, generation of gas due to sublimation of the unreacted monomers generated, or generation of carbides due to a carbonization of the unreacted monomers, may be inhibited.

The isothermal maintaining step prevents an abrupt increase in a reaction rate of the monomers to prevent a bumping phenomenon of a reaction mixture in a reactor. Accordingly, the isothermal maintaining step performs a role of providing a wholly aromatic liquid crystalline polyester resin having uniform properties. The expression 'bumping phenomenon' as used herein refers to a phenomenon in which a reaction mixture violently boils as if the reaction mixture will explode.

The first temperature is about 250 °C to about 270°C and the first time may be about 1 hour to about 2 hours. When the first temperature and the first time are in the respective ranges above, abrupt external leakage of acetic acid generated as a byproduct of a condensation polymerization reaction in the reactor may be controlled to prevent the occurrence of the bumping phenomenon of the reaction mixture.

A reaction mixture that passed through the first temperature increasing step and a reaction mixture that passed through the isothermal maintaining step include a wholly aromatic liquid crystalline polyester resin and an unreacted monomer.

The second temperature increasing step is a step in which an additional condensation polymerization reaction occurs in the reaction mixture that passed through the isothermal maintaining step. The second temperature increasing rate may be about 0.5°C/min to about 1.5°C/min. When the second temperature increasing rate is within the range above, the productivity of the wholly aromatic liquid crystalline polyester resin is maintained at a high level while the condensation polymerization reaction may occur sufficiently.

The acetylation step, the first temperature increasing step, the isothermal maintaining step, and the second temperature increasing step are performed in a reactor in which an agitator is provided and the second temperature increasing step is terminated when a torque value of the agitator reaches about 5 N·m to about 6 N·m. Hence, as a degree of polymerization increases due to progression of synthesis of the wholly aromatic liquid crystalline polyester resin, a viscosity of the resin increases such that the torque value of the agitator increases. Accordingly, a certain correlation is established between the degree of polymerization, the viscosity, and the torque value and when this correlation is evaluated beforehand and the agitator is stopped at a point in which a desired torque value corresponding to a desired degree of polymerization has been reached, the synthesized wholly aromatic liquid crystalline polyester resin is discharged out of the reactor. When the second temperature increasing step is terminated when the torque value reaches about 5 N·m to about 6 N·m, not only a resin having a comparatively high degree of polymerization is obtained but also a polymer (hence, a synthesized resin) is not solidified, thereby facilitating discharge of the resin from the reactor, in addition, solidification of the polymer occurs when excessive polymerization occurs.

A wholly aromatic liquid crystalline polyester resin is synthesized due to a condensation polymerization reaction of the monomers in the first temperature increasing step, the isothermal maintaining step, and the second temperature increasing step. The condensation polymerization reaction may be performed by solution condensation polymerization or bulk condensation polymerization.

Also, a metal catalyst may be used during the condensation polymerization reaction to catalyze the reaction. Examples of the metal catalyst may include alkali metals such as lithium, sodium, and potassium; and oxides, hydroxides, and chlorides of the alkali metals. For example, the metal catalyst may include at least one selected from the group consisting of magnesium acetate, potassium acetate, calcium acetate, zinc acetate, manganese acetate, lead acetate, antimony acetate, and cobalt acetate. A content of the metal catalyst used may be, for example, 0.10 parts by weight or less based on 100 parts by weight of a total amount of the monomers used.

Meanwhile, the method of preparing the wholly aromatic liquid crystalline polyester resin may additionally include a solid phase condensation polymerization reaction of a product (hence, a synthesized resin) obtained from the second temperature increasing step. As a result of the step, a degree of polymerization of the synthesized resin increases. An adequate amount of heat should be applied to the product obtained from the second temperature increasing step for the solid phase condensation polymerization reaction, and as a method of supplying heat, methods using a hot plate, hot air, high temperature fluid, or the like may be used. To remove gas generated during the solid phase condensation polymerization reaction, a removal method such as purging by using inert gas or vacuuming may be used.

A wholly aromatic liquid crystalline polyester resin prepared according to the method of preparing the wholly aromatic liquid crystalline polyester resin according to an embodiment of the present invention having the above-described structure does not include byproducts and unreacted monomers and thus, does not generate gas during an extrusion or an injection process. The expression 'the wholly aromatic liquid crystalline polyester resin does not include unreacted monomers' as used herein includes not only the case in which the wholly aromatic liquid crystalline polyester resin does not include any unreacted monomer, but also the case in which the resin includes an extremely small trace amount of unreacted monomers to an extent that traces of carbonization are not observed on a surface of a molded product after extrusion or injection of a resin compound prepared by using the wholly aromatic liquid crystalline polyester resin.

Also, the wholly aromatic liquid crystalline polyester resins prepared as described above may include various repeating units in a molecular chain thereof, for example, may include at least one repeating unit of the following repeating units:
(1) repeating unit derived from aromatic hydroxy carboxylic acid:

   -O-Ar-CO-
(2) repeating unit derived from aromatic diol

   -O-Ar-O-
(3) repeating unit derived from aromatic dicarboxylic acid

   -OC-Ar-CO-
(4) repeating unit derived from aromatic diamine

   -HN-Ar-NH-
(5) repeating unit derived from aromatic hydroxylamine:

   -HN-Ar-O-
(6) repeating unit derived from aromatic amino carboxylic acid:

   -HN-Ar-CO-

In the formulae of the repeating units, Ar may be phenylene, biphenylene, naphthalene, or an aromatic compound in which two phenylenes are connected to each other by a carbon or a non-carbon element, or phenylene, biphenylene, naphthalene, or an aromatic compound in which two phenylenes are connected to each other by a carbon or a non-carbon element, wherein at least one hydrogen atom is substituted with other elements.

According to another embodiment of the present invention, there is provided a method of preparing a wholly aromatic liquid crystalline polyester resin compound using a wholly aromatic liquid crystalline polyester resin prepared by a method of preparing a wholly aromatic liquid crystalline polyester resin.

The method of preparing the wholly aromatic liquid crystalline polyester resin compound includes a step of synthesizing a wholly aromatic liquid crystalline polyester resin according to the above-described method of preparing the wholly aromatic liquid crystalline polyester resin and a step of melt-kneading the synthesized wholly aromatic liquid crystalline polyester resin and an additive. A batch kneader, a twin-screw extruder, or a mixing roll may be used for the melt-kneading. Also, to facilitate the melt-kneading, a lubricant may be used during the melt-kneading.

The additive may include at least one of an inorganic additive and an organic additive.

The inorganic additive may include a glass fiber, talc, calcium carbonate, mica, or two or more of these, and the organic additive may include a carbon fiber.

Hereinafter, one or more embodiments of the present disclosure will be described in more detail with reference to the following examples. However, these examples are not intended to limit the scope of the present disclosure.

### Examples

### Example 1

### (1) Preparing a wholly aromatic liquid crystalline polyester resin

1850 g (13.4 moles) of 4-hydroxy benzoic acid, 740 g (6.7 moles) of hydroquinone, 450 g (2.7 moles) of terephthalic acid, 865 g (4.0 moles) of 2,6-naphthalene dicarboxylic acid, 3010 g (29.5 moles) of acetic anhydride, and 0.685 g (70 wtppm of potassium ions based on a total amount of monomers) of potassium acetate as a catalyst were introduced to a batch reactor having a capacity of 10 L in which an agitator capable of measuring a torque value and adjusting temperature was provided, nitrogen gas was injected into the reactor to make an internal space of the reactor inert, a reaction mixture was agitated by using an agitator while the temperature of the reactor was increasing up to 150°C over 30 minutes and then maintained at that temperature for two hours to acetylate hydroxy groups of the monomers. Thereafter, acetic acid produced as a byproduct in the acetylation reaction was condensed and removed while increasing the temperature of the reactor to 250 °C at a rate of 1 °C/min and maintaining the temperature at 250°C for 2 hours. Thereafter, the temperature of the reactor was increased again at a rate of 1°C/min and when a torque value of the agitator reached 6 N·m, the product was discharged out of the reactor. Thereafter, the product was retrieved from the reactor to be cooled and solidified. Then, the product was pulverized to an average diameter of about 1 mm. Subsequently, 3000 g of the product pulverized into a uniform particle size was introduced to a rotary kiln reactor having a capacity of 10 L, nitrogen was continuously flowed thereto at a flow rate of 1 Nm'/hr and a solid phase condensation polymerization reaction was performed for 8 hours at a temperature of 300°C to prepare a wholly aromatic liquid crystalline polyester resin. Thereafter, the reactor was cooled to room temperature over 1 hour and the wholly aromatic liquid crystalline polyester resin was retrieved from the reactor.

### (2) Preparing a wholly aromatic liquid crystalline polyester resin compound

The wholly aromatic liquid crystalline polyester resin prepared in (1) and a glass fiber (a pulverized glass fiber having a diameter of 10*µ*m and an average length of 150*µ*m) were mixed in a ratio of 5:5 based on weight and melt-kneaded by using a twin-screw extruder (L/D: 40 and diameter: 20 mm) to prepare a wholly aromatic liquid crystalline polyester resin compound. When preparing the resin compound, vacuum was applied to the twin screw extruder to remove a byproduct.

### Example 2

The wholly aromatic liquid crystalline polyester resin and the resin compound were prepared in the same manner as in Example 1 except for increasing a temperature of a reactor to 270°C at a rate of 1 °C/min and then maintaining the temperature at 270°C for two hours after an acetylation reaction of monomers.

### Comparative Example 1

The wholly aromatic liquid crystalline polyester resin and the resin compound were prepared in the same manner as in Example 1 except for discharging products out of the reactor when a torque value of the agitator reached 6 N·m by continuously increasing a temperature of a reactor at a rate of 1°C/min after an acetylation reaction of monomers.

### Evaluation Example

### (Observing the occurrence of a bumping phenomenon in a reactor)

Each of the wholly aromatic liquid crystalline polyester resin prepared in Examples 1 and 2, and Comparative Example 1 was completely discharged out of the reactor, then the reactor was opened to observe whether a bumping phenomenon occurred in the reactor at a reduced pressure and the results are shown in Table 1 below. 'O' represents the occurrence of a bumping phenomenon and 'X' represents the absence of the bumping phenomenon. Specifically, when a product was present not only on a bottom portion but also on a top portion of the agitator, the bumping phenomenon was deemed to have occurred and when the product was present only on the bottom portion of the agitator, which was immersed in the product, the bumping phenomenon was deemed not to have occurred.

### (Measuring a melt viscosity)

A melt viscosity of each of the wholly aromatic liquid crystalline polyester resin compound prepared in Examples 1 and 2, and Comparative Example 1 was measured by using a capillary viscometer under the conditions of 330°C and 1000/s and the results are shown in Table 1 below.

### (Measuring a heat distortion temperature)

Heat distortion temperature (HDT) of each of the wholly aromatic liquid crystalline polyester resin compound prepared in Examples 1 and 2, and Comparative Example 1 was measured according to ASTM D648 and the results are shown in Table 1 below. The higher the HDT of the resin compound, the higher the heat resistance of the resin compound.

### (Observing generation of gas during injection of a resin compound and carbonization of an injection molded product)

To measure tensile strength and heat distortion temperature of the wholly aromatic liquid crystalline polyester resin compound prepared in Examples 1 and 2, and Comparative Example 1, when preparing specimen of each resin compound by extruding the each resin compound using an injection molding device (FANUC ROBOSHOT 2000i-50B) according to ASTM D638 and D648, generation of gas during preparation of a specimen and carbonization of the specimen (hence, an injection molded product) were observed by eye and the results are shown in Table 1 below. 'O' represents the generation of gas and 'X' represents the absence of the gas. Also, 'O' represents carbonization of each specimen and 'X' represents the absence of the carbonization of each specimen.

**[Table 1]**

| | Occurrence of bumping phenomenon | Melt viscosity (Pa·s) | Heat distortion temperature (°C) | Generation of gas/ carbonization of specimen |
|---|---|---|---|---|
| Example 1 | X | 190 | 280 | X / X |
| Example 2 | X | 212 | 275 | X / X |
| Comparative Example 1 | ○ | 160 | 238 | ○ / ○ |

Referring to the Table 1, the bumping phenomenon did not occur in the reactor during the preparation process of the wholly aromatic liquid crystalline polyester resin in Examples 1 and 2, a melt viscosity and heat distortion temperature of the prepared resin compound were all higher than the resin compound prepared in Comparative Example 1, gas was not generated when the resin compound was injected, and carbonization of the injection molded product did not occur. On the other hand, in Comparative Example 1, the bumping phenomenon occurred in the reactor during the preparation of the wholly aromatic liquid crystalline polyester resin, a melt viscosity and heat distortion temperature were all lower than the resin compound prepared in the Examples 1 and 2, gas was generated during injection of the resin compound, and carbonization of the injection molded product occurred as well.

While the present disclosure has been particularly shown and described with reference to exemplary embodiments thereof, it will be understood by those of ordinary skill in the art that various changes in form and details may be made therein without departing from the scope of the present disclosure as defined by the following claims.

## Claims

1. A method of preparing a wholly aromatic liquid crystalline polyester resin comprising:
a step (a first temperature increasing step) of increasing the temperature of a reaction mixture comprising at least one monomer at a first temperature increasing rate up to a first temperature;
a step (an isothermal maintaining step) of maintaining the reaction mixture that passed through the first temperature increasing step at the first temperature for a first time; and
a step (a second temperature increasing step) of increasing the temperature of the reaction mixture that passed through the isothermal maintaining step at a second temperature increasing rate,
wherein the first temperature is 250°C to 270°C and the first time is 1 hour to 2 hours, and
wherein the first temperature increasing step, the isothermal maintaining step, and the second temperature increasing step are performed in a reactor in which an agitator is provided, and the second temperature increasing step is terminated when a torque value of the agitator reaches 5 N·m to 6 N·m.

2. The method of claim 1, wherein the at least one monomer comprises a hydroxy group containing monomer, and the method further comprises a step (an acetylation step) of contacting the at least one monomer with a carboxylic acid anhydride before the first temperature increasing step to acetylate a hydroxy group of the hydroxy group containing monomer.

3. The method of claim 1, wherein the first temperature increasing rate is 0.5°C/min to 1.5°C/min.

4. The method of claim 1, wherein the second temperature increasing rate is 0.5°C/min to 1.5°C/min.

5. The method of claim 1, wherein the monomer is at least one compound selected from the group consisting of 2,6-naphthalene dicarboxylic acid, 1,4-naphthalene dicarboxylic acid, 2,3-naphthalene dicarboxylic acid, 3-hydroxy-2-naphthalene carboxylic acid, 6-hydroxy-1-naphthalene carboxylic acid, 1,4-dihydroxy naphthalene, 2,6-dihydroxy naphthalene, 4-hydroxy benzoic acid, and benzene-1,4-dicarboxylic acid.

6. The method of claim 1 additionally comprising a step of solid phase condensation polymerization of a reaction mixture that passed through the second temperature increasing step.

## Patentansprüche

1. Verfahren zur Herstellung eines vollaromatischen Flüssigkristall-Polyesterharzes umfassend:
einen Schritt (einen ersten Schritt der Temperaturerhöhung) zur Erhöhung der Temperatur eines Reaktionsgemisches, welches mindestens ein Monomer umfasst, bei einer ersten Temperaturerhöhungsrate bis zu einer ersten Temperatur;
einen Schritt (einen isothermen Halteschritt) zum Halten des Reaktionsgemisches, welches den ersten Schritt der Temperaturerhöhung durchlaufen hat, bei der ersten Temperatur für eine erste Zeit; und
einen Schritt (einen zweiten Schritt der Temperaturerhöhung) zur Erhöhung der Temperatur des Reaktionsgemisches, welches den isothermen Halteschritt durchlaufen hat, bei einer zweiten Temperaturerhöhungsrate,
wobei die erste Temperatur 250°C bis 270°C beträgt und die erste Zeit 1 Stunde bis 2 Stunden beträgt, und
wobei der erste Schritt der Temperaturerhöhung, der isotherme Halteschritt und der zweite Schritt der Temperaturerhöhung in einem Reaktor durchgeführt werden, in welchem eine Rührvorrichtung angeordnet ist, und der zweite Schritt der Temperaturerhöhung beendet wird, wenn ein Drehmomentwert der Rührvorrichtung 5 N·m bis 6 N·m erreicht.

2. Verfahren nach Anspruch 1, **dadurch gekennzeichnet, dass** das mindestens eine Monomer ein hydroxygruppenhaltiges Monomer umfasst und das Verfahren ferner einen Schritt (einen Acetylierungsschritt) zum Kontaktieren des mindestens einen Monomers mit einem Carbonsäureanhydrid vor dem ersten Schritt der Temperaturerhöhung umfasst, um eine Hydroxygruppe des hydroxygruppenhaltigen Monomers zu acetylieren.

3. Verfahren nach Anspruch 1, **dadurch gekennzeichnet, dass** die erste Temperaturerhöhungsrate 0,5°C/min bis 1,5°C/min beträgt.

4. Verfahren nach Anspruch 1, **dadurch gekennzeichnet, dass** die zweite Temperaturerhöhungsrate 0,5°C/min bis 1,5°C/min beträgt.

5. Verfahren nach Anspruch 1, **dadurch gekennzeichnet, dass** das Monomer mindestens eine Verbindung ist, ausgewählt aus der Gruppe bestehend aus 2,6-Naphthalindicarbonsäure, 1,4-Naphthalindicarbonsäure, 2,3-Naphthalindicarbonsäure, 3-Hydroxy-2-Naphthalincarbonsäure, 6-Hydroxy-1-Naphthalincarbonsäure, 1,4-Dihydroxynaphthalin, 2,6-Dihydroxynaphthalin, 4-Hydroxybenzoesäure, und Benzol-1,4-Dicarbonsäure.

6. Verfahren nach Anspruch 1, **dadurch gekennzeichnet, dass** zusätzlich ein Schritt zur Festphasenkondensationspolymerisation eines Reaktionsgemisches, welches den zweiten Schritt der Temperaturerhöhung durchlaufen hat, umfasst ist.

## Revendications

1. Procédé de préparation d'une résine de polyester cristalline liquide totalement aromatique comprenant :
une étape (une première étape d'augmentation de température) d'augmentation de la température d'un mélange réactionnel comprenant au moins un monomère à une première vitesse d'augmentation de température jusqu'à une première température ;
une étape (une étape de maintien isotherme) de maintien du mélange réactionnel qui est passé par la première étape d'augmentation de température à la première température pendant un premier temps ; et
une étape (une seconde étape d'augmentation de température) d'augmentation de la température du mélange réactionnel qui est passé par l'étape de maintien isotherme à une seconde vitesse d'augmentation de température,
dans lequel la première température est de 250 °C à 270 °C et le premier temps est de 1 heure à 2 heures, et
dans lequel la première étape d'augmentation de température, l'étape de maintien isotherme et la seconde étape d'augmentation de température sont réalisées dans un réacteur dans lequel un agitateur est fourni, et la seconde étape d'augmentation de température est achevée lorsqu'une valeur de couple de l'agitateur atteint 5 N.m à 6 N.m.

2. Procédé selon la revendication 1, dans lequel l'au moins un monomère comprend un monomère contenant un groupe hydroxy, et le procédé comprend en outre une étape (une étape d'acétylation) de mise en contact de l'au moins un monomère avec un anhydride d'acide carboxylique avant la première étape d'augmentation de température pour acétyler un groupe hydroxy du monomère contenant un groupe hydroxy.

3. Procédé selon la revendication 1, dans lequel la première vitesse d'augmentation de température est de 0,5 °C/min à 1,5 °C/min.

4. Procédé selon la revendication 1, dans lequel la seconde vitesse d'augmentation de température est de 0,5 °C/min à 1,5 °C/min.

5. Procédé selon la revendication 1, dans lequel le monomère est au moins un composé choisi dans le groupe constitué par l'acide 2,6-naphtalène-dicarboxylique, l'acide 1,4-naphtalène-dicarboxylique, l'acide 2,3-naphtalène-dicarboxylique, l'acide 3-hydroxy-2-naphtalène-carboxylique, l'acide 6-hydroxy-1-naphtalène-carboxylique, le 1,4-dihydroxynaphtalène, le 2,6-dihydroxynaphtalène, l'acide 4-hydroxybenzoïque et l'acide benzène-1,4-dicarboxylique.

6. Procédé selon la revendication 1, comprenant en outre une étape de polymérisation par condensation en phase solide d'un mélange réactionnel qui est passé par la seconde étape d'augmentation de température.
